# EUROPEAN PATENT SPECIFICATION

(11) **EP 3 010 712 B1**
(45) Date of publication and mention of the grant of the patent: **29.05.2024**
(21) Application number: 14738960.5
(22) Date of filing: 16.06.2014
(51) Int. Cl.: B32B 5/02, B32B 5/22, B32B 5/24, B32B 5/26, B32B 7/12, B32B 27/08, B32B 27/12, B32B 27/32

(54) **WATERPROOF MEMBRANE WITH CROSS-LAMINATED FILM**
WASSERDICHTE MEMBRAN MIT EINEM KREUZWEISE BESCHICHTETEN FILM
MEMBRANE RÉSISTANTE À L'EAU AYANT UN FILM À RÉTICULATION CROISÉE

(30) Priority: 19.06.2013 US 201361836750 P
(43) Date of publication of application: 27.04.2016
(73) Proprietor: Illinois Tool Works Inc., Glenview, IL 60025 (US); Schluter Systems, L.P., Plattsburgh, NY 12901 (US)
(72) Inventor: RANCICH, Michael, J., Houston, TX 77041 (US); NIELSEN, Peter, Purcellville, VA 20131 (US); DEJESUS, William, M., Charlotte, NC 28270 (US)
(74) Representative: Meissner Bolte Partnerschaft mbB
(86) International application number: PCT/US2014/042511
(87) International publication number: WO 2014/204845

(56) References cited:
- EP-A1- 0 541 311
- WO-A1-2005/065941
- US-A- 4 469 741
- US-A- 4 606 970
- US-A- 6 075 179

## Description

### BACKGROUND

The ability to effectively waterproof a building structure such as a wall or floor is extremely important. Waterproofing is important to prevent moisture incursion into, and degradation of, the underlying substrate and structure.

In one example, a waterproof surface is required between tile and an underlying substrate (e.g., walls or floor) and the supporting structure, (e.g., studs), in bathrooms, showers and the like where wet environments and moisture and/or water incursion may occur. Water will often seep behind tile walls or underneath floors, through grout, and into the wall or floor substrate. If the underlying substrate is formed from a water resistant or perhaps even a waterproof material, potential damage to the substrate and the underlying structure is minimized. For example, cement board or water resistant gypsum wall board are often used as a substrate in showers and the like.

However, such materials are not inherently waterproof and may be subject to degradation over time. Moreover, in use, board-formed materials may be cut and seams used where boards are placed together, such as along extended surfaces, at corners, around openings and the like, which exacerbates the potential for water incursion and degradation. As such, water and/or moisture incursion into the substrate, or though the substrate and into the underlying structure may occur unless these substrates are protected across their entire surfaces with a waterproof element.

Other materials are also known. For example, KERDI-BOARD, commercially available from Schluter is multi-component, waterproof board for use in areas that may be subjected to high moisture. However, because they are rigid members that may require seams and cuts to accommodate long stretches of surface, corners and the like, the seams and penetrations must be treated with a waterproof element. US 4 469 741 A discloses laminated sheets having good physical strength and cushioning characteristics which are to be used as wrapping materials or construction materials.

Accordingly, there is a need for a waterproof element for use in high moisture environments in new construction, remodeling and retrofits. Desirably, such an element is flexible and in sheet or roll form. More desirably still, such an element is formed as a membrane, is sufficiently flexible to permit use in corners, curved areas and the like, without seams and joints. Still more desirably, such a material is sufficiently strong, e.g., high strength, to prevent tears and punctures when used at, for example, construction sites.

### SUMMARY

The present invention provides a membrane according to claim 1, a method according to claim 2 and uses according to claim 4 and 6. Preferred embodiments are defined in the dependent claims.

These and other features and advantages of the present invention will be readily apparent from the following detailed description, in conjunction with the claims.

### DESCRIPTION OF THE DRAWINGS

The benefits and advantages of the present invention will become more readily apparent to those of ordinary skill in the relevant art after reviewing the following detailed description and accompanying drawings, wherein:
FIG. 1 is a cross-sectional view of a waterproof membrane with cross laminated film; and
FIG. 2 is a cross-sectional view of an exemplary use of the membrane in application of tile to a wall or floor.

### DETAILED DESCRIPTION

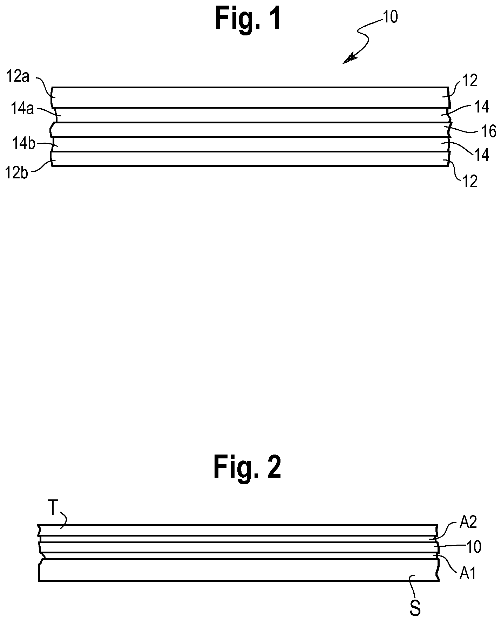

FIG. 1 illustrates a waterproof membrane 10 with cross laminated film. The membrane 10 is formed as a laminate having a structure of ABCBA in which A is a non-woven sheet 12, B is a polymeric tie resin layer 14 and C is an oriented cross laminated film 16.

The non-woven sheet 12 is a polypropylene (PP) non-woven fabric having a basis weight of 30,5 g/m2 (0.9 osy). A suitable material is Elite 100 Lt. Grey #49623 commercially available from Hanes Companies, Inc. Such a material has a basis weight of about 0.9 ounces per yard (osy) per ASTM D 3776M-09A, an elongation of about 75 percent in the machine direction and 85 percent in the cross direction per ASTM D 5034-09, a grab tensile strength of about 86 Newtons /2.54 centimeters (N/2.54cm) in the machine direction and 70 N/2.54cm in the cross direction per ASTM D 5034-09 and a trap tear strength of about 7 pounds (lbs) in the machine direction and 9.7 lbs in the cross direction per ASTM D 5733-09.

The polymeric tie layer 14 provides adhesion between the non-woven sheet 12 and the oriented cross laminated film 16 (discussed below). The tie layer is a propylene based elastomer blend with low density polyethylene (LDPE). The propylene based elastomer is 25 percent by weight of the blend, and LDPE is 75 percent by weight of the blend. The tie layer can be present or applied at about 5 lbs per ream to about 20 lbs per ream of membrane and can be at about 7 lbs per ream to about 10 lbs per ream. One suitable LDPE is commercially available from Westlake Chemical Corporation under the designation EC808. Other suitable materials include LyondellBasell NA214.

One suitable propylene based elastomer is commercially available from Exxon-Mobil Chemical as Vistamaxx^{™} 6202. Other suitable materials include thermoplastic polyolefins, such as Adflex Z 108, commercially available from LyondellBasell Industries.

One suitable cross laminated film 16 is an oriented cross laminated polyolefin, such as a high density polyethylene (HDPE) film commercially available from VALERON^{®} Strength Films of Houston, Texas. The oriented cross laminated HDPE film 16 has a thickness of about 3.0 mils. The VALERON^{®} Strength Films brand film is an HDPE material that is formed from a cross laminate of two film layers or plies that are each extruded and bias cut in a continuous spiral to obtain molecular orientation at an angle between 1 degree and 89 degrees with the machine direction. The bias cut film plies are then cross-laminated, and can be, although not necessarily, cross-laminated with an adhesive or polymer between the film layers to form a web. Such a film is disclosed and described in Barnes, US Patent No. 6,284,344.

In a present membrane 10, the non-woven layer 12 is a polypropylene non-woven material in a basis weight of about 0.9 osy, the tie layer is, as noted above, a blend of 75 percent by weight LDPE and 25 percent by weight propylene elastomer. Each tie layer 14 is present at about 7-10 lbs per ream, and in an embodiment, about 8 lbs per ream of membrane 10, and the oriented cross laminated film 16 is a 3.0 mil VALERON^{®} Strength Films brand film.

It is contemplated that the membrane 10 will be made in a lamination process. For example, in one extrusion lamination process, in a first-pass lamination, the non-woven material 12a is laminated to the oriented cross laminated film 16 using about 7 to 10 lbs per ream of the tie layer 14a blend forming a partially formed membrane. In a second-pass lamination, the non-woven material 12b is laminated to the opposing side of the oriented cross laminated film 16, again using about 7 to 10 lbs per ream of the tie layer 14b blend to form the ABCBA structure described above. Other processes and other lamination processes are also contemplated, including adhesives, solvent-less bonding and the like.

In one contemplated use, as illustrated in FIG. 2, the membrane 10 is used as a waterproofing membrane behind wall or floor tile T in a shower or under a floor for waterproofing or to prevent reflection cracking. The membrane 10 is applied to the substrate S (e.g., gypsum board, cement board or the like) in the tile area with a thinset adhesive A1 (such adhesives will be recognized by those skilled in the art). After a sufficient drying/curing time (about 24 hours), the tile T is adhered to the other side of the membrane 10 using thinset adhesive A2. It will be appreciated that the membrane 10 can be applied through corners, over surface irregularities, and in non-linear locations (e.g., curved or curvilinear surfaces) without the need for seams and the like.

In an embodiment, a method of establishing a waterproof barrier between a substrate and a tiled wall includes applying on the substrate a waterproof membrane having a first non-woven layer with first and second surfaces, a cross laminated film layer, a second non-woven layer with first and second surfaces and a tie layer between the first non-woven first surface and the cross laminated film and the second non-woven first surface and the cross laminated film. Tile is then applied over the waterproof membrane. The method can include the steps of applying a coat of thinset adhesive on the substrate, applying the waterproof membrane to the thinset adhesive, applying a second coat of thinset on the membrane, and applying the tile to the coat of thinset adhesive. The cross laminated film can be an oriented cross laminated film.

It has been found that the present membrane provides surprising flexibility and light weight in a high strength structure. The strength and physical properties provided by a flexible film, such as the VALERON^{®} brand film, allows for significantly less polymer to be used between the non-woven surface layers. This permits a thinner structure which is more flexible than known products. In addition, this provides a membrane that is easier to handle and to apply to a work area. In that the film layer can be a relatively thin element (about 3.0 mils), there is reduced stiffness which makes it easier to embed the product in thinset adhesive applied to the wall structure and also allows the film to conform to corners, curvilinear surfaces, such as arches and the like, and surface irregularities. The light weight of the membrane 10 helps to prevent it from sliding down the wall during application due to its own weight.

In addition, the membrane provides an excellent barrier to water vapor. The oriented films, such as the HDPE based VALERON^{®} brand film, provides an excellent barrier to water vapor which permits use in regular and steam showers. Known lower barrier elements require thicker polymer layers to meet the requirements for steam showers. This results in a thicker, less flexible and heavier membrane.

A sample of a membrane according to the present disclosure was compared to a sample of a commercially available waterproof membrane for use in areas that may be subjected to high moisture. The samples were tested for tensile break in the machine and transverse directions measured in pounds per inch (lbs/in) in accordance with standard ASTM D 882, tear propagation resistance (trouser tear) in the machine and transverse directions measured in pounds per inch (lbs/in) in accordance with standard ASTM D 1938, Toyo impact measured in kilogram centimeters (kg*cm) in accordance with a modified standard ASTM D 781 (mod) and water vapor transmission rate (WVTR) measured in US Perms (1 grain of water vapor per hour, per square foot, per inch of mercury) at 37.8C at 90% relative humidity, in accordance with standard ASTM E96 - procedure E. The basis weight of each sample was also measured. The results are shown below in Table 1.

**TABLE 1 - COMPARISON OF VARIOUS PHYSICAL PROPERTIES FOR A PRESENT MEMBRANE AND A COMMERCIALLY AVAILABLE WATERPROOF MEMBRANE**

| Physical Property | Method | Units | | Present membrane | Commercially available waterproof membrane |
|---|---|---|---|---|---|
| Basis wt. | | Lbs/ream | | 101 | 163 |
| Tensile break | ASTM D 882 | Lbs/in | MD | 32 | 31 |
| | | | TD | 29 | 24 |
| Tear propagation | ASTM D 1938 | lbs | MD | 7.2 | 5.9 |
| | | | TD | 6.6 | 6.4 |
| Toyo impact | ASTM D 781 (mod) | Kg*cm | | 145 | 100 |
| WVTR | ASTM E96-Proc. E | US Perms | 37.8C, 90% RH | <0.075 | 0.90 |

As can be seen from the data of Table 1, above, a membrane in accordance with the present disclosure has a number of advantages over the commercially available waterproof membrane. The present membrane is lighter in weight and stronger in each category tested. In addition, it exhibits a lower water vapor transmission rate when tested at 37.8C and at a relative humidity of 90%.

The tie layer or resin, e.g., the elastomer used to laminate the non-woven and oriented cross laminated film layers, provides excellent adhesion to both the HDPE based films the PP or other-based non-woven material. Again, the specific formulation of the tie layer can be varied to meet the requirements and suitability of the adhesion needs between the oriented cross laminated film and the non-woven material. The elastomer tie layer reduces the stiffness of the laminating layers further enhancing the flexibility of the membrane.

## Claims

1. A membrane (10), comprising:
- a first non- woven layer (12a) having first and second surfaces;
- a high density polyethylene (HDPE) film layer (16);
- a tie layer (14) between the first non-woven first surface and the HDPE film layer (16);
- a second non-woven layer (12b) having first and second surfaces; and
- a tie layer (14) between the second non-woven first surface and the HDPE film layer (16),
wherein the tie layers (14) are propylene based elastomer blends with LDPE, and wherein the membrane is formed as a laminate have a structure of ABCBA in which A is the non-woven layer (12a, 12b), B is the tie-layer (14) and C is the HDPE film layer (16), wherein the tie layers (14) provide adhesion between the first non-woven layer (12a) and the HDPE film layer (16) and between the second non-woven layer (12b) and the opposing side of HDPE film layer (16),
wherein the membrane is a waterproof membrane,
**characterized in that**
the HDPE film layer (16) is formed of two plies of HDPE being mechanically oriented forming an oriented cross laminated film layer, that the non-woven layer (12) is a polypropylene non-woven fabric having a basis weight of 30,5 g/m² (0.9 osy),
that in the tie layer (14) the propylene based elastomer is present at 25 percent by weight of the blend and wherein the LDPE is present at 75 percent by weight of the blend, and
that the HDPE oriented cross laminated film (16) has a thickness of 0,076 mm (3.0 mils).

2. A method of making a waterproof membrane (10) comprising the step of:
- adhering a HDPE film layer (16) to a first polypropylene non-woven layer (12) having first and second surfaces,
wherein the adhering step is carried out by applying a tie layer (14) between the first non-woven layer (12) and the HDPE film layer (16);
- adhering a second polypropylene non-woven layer (12) to the HDPE film layer (16) by applying a tie layer (14) between the second non-woven layer (12) and the HDPE film layer (16),
wherein the tie layers (14) are a propylene based elastomer blend with LDPE, and wherein the membrane is formed as a laminate have a structure of ABCBA in which A is the non-woven layer (12a, 12b), B is the tie-layer (14) and C is the HDPE film layer (16), wherein the tie layers (14) provide adhesion between the first non-woven layer (12a) and the HDPE film layer (16) and between the second non-woven layer (12b) and the opposing side of HDPE film layer (16),
**characterized in that**
the HDPE film layer (16) is formed of two plies of HDPE being mechanically oriented forming an oriented cross laminated film layer,
that the non-woven layer (12) has a basis weight of 30,5 g/m² (0.9 osy), that in the tie layer (14) the propylene based elastomer is present at 25 percent by weight of the blend and wherein the LDPE is present at 75 percent by weight of the blend, and
that the HDPE oriented cross laminated film (16) has a thickness of 0,076 mm (3.0 mils).

3. The method of claim 2 including the step of laminating the first non-woven layer (12) to the cross laminated film layer (16) at a side of the cross laminated HDPE film layer (16) and laminating the second non-woven (12) layer to the cross laminated HDPE film layer (16) at an opposite side of the cross laminated film layer (16).

4. Use of a membrane (10) according to claim 1 for establishing a waterproof barrier between a substrate (S) and a tiled wall comprising:
- the waterproof membrane (10); and
- applying tile (T) over the waterproof membrane (10).

5. The use of a membrane (10) according to claim 4, further including the steps of applying a coat of thinset adhesive (A1) on the substrate (S); applying the waterproof membrane (10) to the thinset adhesive (A1), applying a second coat of thinset (A2) on the membrane (10), and applying the tile (T) to the coat of thinset adhesive (A2).

6. Use of a flexible membrane (10) according to claim 1 for waterproofing a curvilinear finished surface,
wherein the flexible membrane (10) may be seamlessly applied to a substrate (S) on a curvilinear surface for waterproofing.

## Patentansprüche

1. Membran (10), aufweisend:
- eine erste Vlieslage (12a) mit einer ersten und zweiten Oberfläche;
- eine Polyethylenfolienschicht (16) hoher Dichte (HDPE);
- eine Haftvermittlerschicht (14) zwischen der ersten Oberfläche des ersten Vlieses und der HDPE-Folienschicht (16);
- eine zweite Vlieslage (12b) mit einer ersten und zweiten Oberfläche; und
- eine Haftvermittlerschicht (14) zwischen der ersten Oberfläche des zweiten Vlieses und der HDPE-Folienschicht (16),
wobei die Haftvermittlerschichten (14) Elastomermischungen auf Propylenbasis mit LDPE sind, und wobei die Membran als ein Laminat ausgebildet ist, das einen ABCBA-Aufbau aufweist, in dem A die Vlieslage (12a, 12b) ist, B die Haftvermittlerschicht (14) ist und C die HDPE-Folienschicht (16) ist, wobei die
Haftvermittlerschichten (14) eine Haftung zwischen der ersten Vlieslage (12a) und der HDPE-Folienschicht (16) und zwischen der zweiten Vlieslage (12b) und der gegenüberliegenden Seite der HDPE-Folienschicht (16) bereitstellen,
wobei die Membran eine wasserdichte Membran ist,
**dadurch gekennzeichnet, dass**
die HDPE-Folienschicht (16) aus zwei HDPE-Lagen gebildet ist, die mechanisch orientiert sind und eine orientierte, kreuzlaminierte Folienschicht bilden, dass die Vlieslage (12) ein Polypropylen-Vliesstoff mit einem Flächengewicht von 30,5 g/m² (0,9 osy) ist,
dass in der Haftvermittlerschicht (14) das Elastomer auf Propylenbasis mit 25 Gew.-% in der Mischung vorliegt und wobei das LDPE mit 75 Gew.-% in der Mischung vorliegt, und dass die orientierte kreuzlaminierte HDPE-Folie (16) eine Dicke von 0,076 mm (3,0 mils) aufweist.

2. Verfahren zur Herstellung einer wasserdichten Membran (10), das folgenden Schritt aufweist:
- Verkleben einer HDPE-Folienschicht (16) mit einer ersten Polypropylen-Vlieslage (12), die eine erste und zweite Oberfläche aufweist,
wobei der Klebeschritt durch Aufbringen einer Haftvermittlerschicht (14) zwischen der ersten Vlieslage (12) und der HDPE-Folienschicht (16) ausgeführt wird;
- Verkleben einer zweiten Polypropylen-Vlieslage (12) mit der HDPE-Folienschicht (16) durch Aufbringen einer Haftvermittlerschicht (14) zwischen der zweiten Vlieslage (12) und der HDPE-Folienschicht (16),
wobei die Haftvermittlerschichten (14) eine Elastomermischung auf Propylenbasis mit LDPE sind, und wobei die Membran als ein Laminat ausgebildet ist, das einen ABCBA-Aufbau aufweist, in dem A die Vlieslage (12a, 12b) ist, B die Haftvermittlerschicht (14) ist und C die HDPE-Folienschicht (16) ist, wobei die Haftvermittlerschichten (14) eine Haftung zwischen der ersten Vlieslage (12a) und der HDPE-Folienschicht (16) und zwischen der zweiten Vlieslage (12b) und der gegenüberliegenden Seite der HDPE-Folienschicht (16) bereitstellen,
**dadurch gekennzeichnet, dass**
die HDPE-Folienschicht (16) aus zwei HDPE-Lagen gebildet ist, die mechanisch orientiert sind und eine orientierte, kreuzlaminierte Folienschicht bilden, dass die Vlieslage (12) ein Flächengewicht von 30,5 g/m² (0,9 osy) aufweist, dass in der Haftvermittlerschicht (14) das Elastomer auf Propylenbasis mit 25 Gew.-% in der Mischung vorliegt und wobei das LDPE mit 75 Gew.-% in der Mischung vorliegt, und
dass die orientierte kreuzlaminierte HDPE-Folie (16) eine Dicke von 0,076 mm (3,0 mils) aufweist.

3. Verfahren nach Anspruch 2, das den Schritt des Laminierens der ersten Vlieslage (12) auf die kreuzlaminierte Folienschicht (16) an einer Seite der kreuzlaminierten HDPE-Folienschicht (16) und des Laminierens der zweiten Vlieslage (12) auf die kreuzlaminierte HDPE-Folienschicht (16) an einer gegenüberliegenden Seite der kreuzlaminierten Folienschicht (16) beinhaltet.

4. Verwendung einer Membran (10) nach Anspruch 1 zum Bilden einer wasserdichten Barriere zwischen einem Substrat (S) und einer gefliesten Wand, aufweisend:
- die wasserdichte Membran (10); und
- das Aufbringen einer Fliese (T) über der wasserdichten Membran (10).

5. Verwendung einer Membran (10) nach Anspruch 4, ferner beinhaltend die Schritte des Aufbringens eines Thinset-Klebers (Al) auf das Substrat (S); des Aufbringens der wasserdichten Membran (10) auf den dünnen Klebstoff (Al), des Aufbringens einer zweiten Schicht aus Thinset (A2) auf die Membran (10) und des Aufbringens der Fliese (T) auf die Schicht aus Thinset-Kleber (A2).

6. Verwendung einer flexiblen Membran (10) nach Anspruch 1 zum Wasserdicht machen einer gekrümmten fertigen Oberfläche, wobei die flexible Membran (10) zum Wasserdicht machen nahtlos auf ein Substrat (S) auf einer gekrümmten Oberfläche aufgebracht werden kann.

## Revendications

1. Membrane (10), comprenant :
- une première couche non-tissée (12a) ayant des première et deuxième surfaces ;
- une couche de film de polyéthylène haute densité (HDPE) (16) ;
- une couche de liaison (14) entre la première surface non-tissée et la couche de film HDPE (16) ;
- une deuxième couche non-tissée (12b) ayant des première et deuxième surfaces ; et
- une couche de liaison (14) entre la deuxième première surface non-tissée et la couche de film HDPE (16),
dans lequel les couches de liaison (14) sont des mélanges élastomères à base de propylène avec du LDPE, et dans lequel la membrane est formée comme un stratifié ayant une structure d'ABCBA dans laquelle A est la couche non-tissée (12a, 12b), B est la couche de liaison (14) et C est la couche de film HDPE (16), dans lequel les couches de liaison (14) assurent l'adhérence entre la première couche non-tissée (12a) et la couche de film HDPE (16) et entre la deuxième couche non-tissée (12b) et le côté opposé de la couche de film HDPE (16),
dans lequel la membrane est une membrane étanche à l'eau, **caractérisé en ce que**
la couche de film HDPE (16) est formée de deux plis de HDPE étant orientés mécaniquement formant une couche de film stratifiée croisée orientée, que la couche non-tissée (12) est un tissu non-tissé de polypropylène ayant un poids de base de 30,5 g/m² (0,9 osy), que dans la couche de liaison (14) l'élastomère à base de propylène est présent à 25 pour cent en poids du mélange et dans lequel le LDPE est présent à 75 pour cent en poids du mélange, et
que le film HDPE stratifié croisé (16) orienté a une épaisseur de 0,076 mm (3,0 mils).

2. Procédé de fabrication d'une membrane étanche à l'eau (10) comprenant l'étape de :
- le collage d'une couche de film HDPE (16) sur une première couche non-tissée de polypropylène (12) ayant des première et deuxième surfaces,
dans lequel l'étape de collage est effectuée par l'application d'une couche de liaison (14) entre la première couche non-tissée (12) et la couche de film HDPE (16) ;
- le collage d'une deuxième couche non-tissée de polypropylène (12) à la couche de film HDPE (16) par l'application d'une couche de liaison (14) entre la deuxième couche non-tissée (12) et la couche de film HDPE (16),
dans lequel les couches de liaison (14) sont un mélange d'élastomère à base de propylène avec du LDPE, et dans lequel la membrane est formée comme un stratifié ayant une structure d'ABCBA dans laquelle A est la couche non-tissée (12a, 12b), B est la couche de liaison (14) et C est la couche de film HDPE (16), dans lequel les couches de liaison (14) assurent l'adhérence entre la première couche non-tissée (12a) et la couche de film HDPE (16) et entre la deuxième couche non-tissée (12b) et le côté opposé de la couche de film HDPE (16),
**caractérisée en ce que**
la couche de film HDPE (16) est formée de deux plis de HDPE orientés mécaniquement formant une couche de film stratifiée croisée orientée, que la couche non-tissée (12) a un poids de base de 30,5 g/m² (0,9 osy), que dans la couche de liaison (14) l'élastomère à base de propylène est présent à 25 % en poids du mélange et dans laquelle le LDPE est présent à 75 % en poids du mélange, et
que le film HDPE stratifié croisé (16) orienté a une épaisseur de 0,076 mm (3,0 mils).

3. Procédé selon la revendication 2, comprenant l'étape de stratification de la première couche non-tissée (12) sur la couche de film stratifié croisé (16) au niveau d'un côté de la couche de film HDPE stratifié croisé (16) et de stratification de la deuxième couche non-tissée (12) sur la couche de film HDPE stratifié croisé (16) au niveau d'un côté opposé de la couche de film stratifié croisé (16).

4. Utilisation d'une membrane (10) selon la revendication 1 pour l'établissement d'une barrière étanche à l'eau entre un substrat (S) et une paroi carrelée comprenant :
- la membrane étanche à l'eau (10) ; et
- l'application du carreau (T) sur la membrane étanche à l'eau (10).

5. Utilisation d'une membrane (10) selon la revendication 4, comprenant en outre les étapes d'application d'une couche d'adhésif à prise mince (A1) sur le substrat (S) ; d'application de la membrane étanche à l'eau (10) sur l'adhésif à prise mince (A1), d'application d'une deuxième couche d'adhésif à prise mince (A2) sur la membrane (10), et d'application du carreau (T) sur la couche d'adhésif à prise mince (A2).

6. Utilisation d'une membrane flexible (10) selon la revendication 1 pour l'imperméabilisation d'une surface finie curviligne,
dans laquelle la membrane flexible (10) peut être appliquée sans soudure sur un substrat (S) sur une surface curviligne pour l'imperméabilisation.
